# EUROPÄISCHE PATENTSCHRIFT

(11) **EP 0 361 172 B1**
(45) Veröffentlichungstag und Bekanntmachung des Hinweises auf die Patenterteilung: **27.04.1994**
(21) Anmeldenummer: 89116622.5
(22) Anmeldetag: 08.09.1989
(51) Int. Cl.: B23K 35/30, B23K 9/04, B02C 4/30

(54) **Verschleissfeste Walzenbeschichtung für die Walzen von Walzenpressen und Verfahren zum Aufbauen der Walzenbeschichtung**
Wear-resistant roller coating for roller crushers, and method for building up said coating
Revêtement résistant à l'usure pour cylindres de broyeurs à cylindres et procédé pour appliquer ledit revêtement

(30) Priorität: 22.09.1988 DE 3832225; 09.08.1989 DE 3926232
(43) Veröffentlichungstag der Anmeldung: 04.04.1990
(73) Patentinhaber: Klöckner-Humboldt-Deutz Aktiengesellschaft, 51149 Köln (DE); OERLIKON SCHWEISSTECHNIK GMBH, 67304 Eisenberg (DE)
(72) Erfinder: Scholz, Erhard, D-6719 Eisenberg (DE); Partz, Klaus-Dieter, Dr., D-5653 Leichlingen (DE); Beck, Rainer, Dr., D-5653 Leichlingen (DE); Höffgen, Georg, D-5000 Köln 91 (DE); Hensell, Bernd, D-5064 Rösrath (DE); Schreck, Karl, Dr., D-6470 Oberursel (DE)
(74) Vertreter: Roesner, Werner

(56) Entgegenhaltungen:
- CH-A- 548 253
- DE-B- 1 120 242
- FR-A- 1 183 202
- GB-A- 2 183 181
- US-A- 4 110 514
- WELDING JOURNAL, Band 60, Nr. 9, September 1981, Seiten 25-28, Miami, FL, US; P.S.DOYEN et al.: "A new technique for welding tool steel"
- AUTOMATIC WELDING, Band 38, Nr. 3, März 1985, Seiten 43-45, Cambridge, GB; A.Y.SHVARTSER et al.: "Excavator shovel teeth reconditioned by surfacing with varying composition metal"

## Beschreibung

Bei Walzenbrechern und Walzenmühlen wird sprödes Mahlgut in den Walzenspalt eingezogen und dort einer Druckzerkleinerung unterworfen. Aus EP-A-0 084 383 ist auch die sogenannte Gutbettzerkleinerung im Walzenspalt einer Hochdruck-Walzenpresse bekannt, bei der die einzelnen Partikel des durch Reibung in den Walzenspalt eingezogenen Mahlgutes in einem Gutbett, d. h. in einer zwischen den beiden Walzenoberflächen zusammengedrückten Materialschüttung bei Anwendung eines extrem hohen Druckes gegenseitig zerquetscht werden.

Es versteht sich, daß dabei die Walzenoberflächen einer außerordentlich hohen Beanspruchung und Verschleißgefahr ausgesetzt sind. Man hat schon versucht, auf den Walzengrundkörper zunächst eine vergleichsweise weiche duktile metallische Pufferlage und darauf wiederum eine gegebenenfalls mehrlagige harte verschleißfeste Panzerschicht aufzuschweißen. Diese Art von verschleißfester Walzenoberflächenbeschichtung ist an sich durch DE-B-1 120 242 bekannt, bei welcher auf den Walzengrundkörper durch Auftragsschweißung zunächst eine niedriggekohlte ferritische Schicht aufgebracht wird, auf welche dann eine austenitische Schicht aufgetragen wird und auf welche schließlich eine hochverschleißfeste Panzeraußenschicht aufgeschweißt wird. Die bekannte Oberflächenbeschichtung ist dadurch gekennzeichnet, daß sich Übergangsschichten ohne Härtesteigerung gegenüber dem Walzengrundkörper und der innersten Schicht sowie gegenüber der Innersten und der mittleren Schicht ergeben, worauf schließlich ein Härtesprung von der mittleren Schicht zur Panzeraußenschicht erfolgen muß. Man meinte, daß Risse in der Panzerschicht in der darunter angeordneten Pufferlage zum Stillstand kommen würden. Es hat sich aber gezeigt, daß bei den extrem hohen Drücken, die bei der Durchführung der Gutbettzerkleinerung im Walzenspalt einer Hochdruck-Walzenpresse auftreten, Risse der harten Panzerschicht durch die weiche Pufferlage hindurch in den Walzengrundwerkstoff eindringen können, besonders bei schwingender Belastung und Druckschwellbeanspruchung der Walzenoberflächen.

Der Erfindung liegt die Aufgabe zugrunde, für die Walzen von Walzenmaschinen, insbesondere von Hochdruck-Walzenpressen, eine verschleißfeste Oberflächenbeschichtung zu schaffen, die ein hohes Standzeitvermögen aufweist und in wirtschaftlicher Weise auf den Walzengrundkörper aufbaubar ist.

Diese Aufgabe wird konstruktionsmäßig durch die Merkmale des Anspruchs 1 und verfahrensmäßig durch die Merkmale des Anspruchs 5 gelöst. Bevorzugte Ausführungen sind in den abhängigen Ansprüchen 2-4 offenbart.

Die erfindungsgemäße Walzenbeschichtung besteht aus drei auf dem Walzengrundkörper aufgebauten übereinanderliegenden Schichten verschiedener Werkstoffe, dadurch gekennzeichnet, daß die radial innerste Schicht der Walzenpanzerung aus einem unlegierten ferritischen Werkstoff, die mittlere Schicht aus einem Cr, Mo-legierten ferritischen Werkstoff und die Außenschicht aus einer verschleißfesten Legierung bestehen, so daß sich proportional zum radialen Abstand der Schichten vom Walzengrundkörper ein allmählicher Härte- und Festigkeitsanstieg vom Walzengrundwerkstoff über die Zwischenschichten zur Panzeraußenschicht ergibt. Anders ausgedrückt: Bei der erfindungsgemäßen Walzenbeschichtung nehmen Härte und Festigkeit der Schichten mit zunehmendem Abstand von der Walzenbeschichtungsoberfläche einigermaßen gleichmäßig bis auf die Härte und Festigkeit des Walzengrundwerkstoffes ab. Damit werden Härtesprünge innerhalb der Walzenbeschichtung, insbesondere hervorgerufen durch zwischengelegte vergleichsweise weiche Pufferlagen, vermieden. Infolge des stufenlosen gleichmäßig ansteigenden bzw. abfallenden Verlaufes von Härte und Festigkeit in radialer Richtung durch die Walzenbeschichtung kommen Risse, sofern sie in der verschleißfesten harten Außenschicht auftreten sollten, zum Stillstand und setzen sich nicht bis in den Walzengrundwerkstoff fort, so daß das Standzeitvermögen der erfindungsgemäßen Walzenbeschichtung auch bei einer dynamischen Druckschwellbeanspruchung vergleichsweise hoch ist.

Als Beispiel für die Dicke der jeweiligen oben genannten Werkstoffschichten wird angegeben, daß die innerste Schicht z. B. 4 mm, die mittlere Schicht z. B. ebenfalls 4 mm und die Außenschicht z. B. 7 mm dick sein können. Nach einem weiteren Merkmal der Erfindung besteht auch die Möglichkeit, daß die am Walzengrundwerkstoff angeordnete radial innerste Schicht durch Formschweißen aufgebracht ist und mit einer Dicke von z. B. 100 bis 200 mm erheblich dicker ist als die übrigen Schichten. Diese Lösung ist vorteilhaft, um beim Regenerieren der Panzeraußenschicht nicht in den schwer schweißbaren Walzengrundwerkstoff zu kommen; vielmehr steht dann beim Regenerieren ein ausreichend fest legierter ferritischer Werkstoff mit guten Schweißeigenschaften zur Verfügung.

Nach einem besonderen Merkmal der Erfindung kann der Legierungswerkstoff der Außenschicht der erfindungsgemäßen Walzenbeschichtung folgende Zusammensetzung in Gewichts-% aufweisen:

| | |
|---|---|
| C | 0,8 bis 2,6 |
| Si | 1,5 bis 3,5 |
| Mn | 0,7 bis 1,5 |
| Cr | 5,0 bis 15,0 |
| Mo | 0,8 bis 3,0 |
| N | max. 0,1 |
| Al | max. 0,2 |
| Ti | 0,0 bis 10,0 |
| V | 0,0 bis 10,0 |
| Nb | 0,0 bis 15,0 |
| Rest | Eisen |

Durch diese Legierung werden in verschweißtem Zustand die sich metallurgisch widersprechenden Ziele Verschleißbeständigkeit, Rißfreiheit, Duktilität und Festigkeit erreicht. Die Verwendung von Sonderkarbid- und Nitridbildnern begünstigt die Ausbildung besonders feiner Karbide und eine gleichmäßige Verteilung der Karbide. Hierdurch werden die Verschleißeigenschaften der erfindungsgemäßen Walzenbeschichtung besonders günstig beeinflußt. In jedem Fall hat der erfindungsgemäße Legierungswerkstoff eine Härte von mehr als 52 HRC (Härteprüfung nach Rockwell C) und er ist auch dynamischen Druckschwellbeanspruchungen der Oberfläche von Hochdruck-Walzenpressen bei der Durchführung der Gutbettzerkleinerung gewachsen.

Ein Verfahren zum Aufbau der Walzenbeschichtung ist erfindungsgemäß dadurch gekennzeichnet, daß die inneren Schichten durch Unterpulver-Bandauftragsschweißung und die Außenschicht durch Unterpulver-Füllbandauftragsschweißung aufgebracht werden. Beim Füllbandauftragsschweißen, an sich durch CH-A-548 253 bekannt, sind die Legierungsbestandteile in Pulverform in ein aus Reineisen bestehendes flaches Hohlband gefüllt und die eigentliche Legierung selbst entsteht erst beim Schweißprozeß. Die Außenschicht der erfindungsgemäßen Walzenbeschichtung kann dabei durch Aufschweißen von nebeneinanderliegenden Ringlagen oder durch eine endlose spiralförmige Aufschweißung aufgebaut werden. Durch die Füllbandauftragsschweißung werden eine gleichmäßige Verteilung der Panzerlegierung und ein gleichmäßiger Beschichtungsaufbau erreicht.

## Patentansprüche

1. Verschleißfeste Oberflächenbeschichtung für die Walzen Von Hochdruck-Walzenpressen zur Druckzerkleinerung körnigen Gutes, mit drei auf dem Walzengrundkörper durch Auftragsschweißung aufgebauten übereinanderliegenden Schichten verschiedener Werkstoffe, dadurch gekennzeichnet, daß die radial innerste Schicht der Walzenpanzerung aus einem unlegierten ferritischen Werkstoff, die mittlere Schicht aus einem Cr, Mo-legierten ferritischen Werkstoff und die Außenschicht aus einer verschleißfesten Legierung bestehen, so daß sich proportional zum radialen Abstand der Schichten vom Walzengrundkörper ein allmählicher Härte- und Festigkeitsanstieg vom Walzengrundwerkstoff über die Zwischenschichten zur Panzeraußenschicht ergibt.

2. Walzenbeschichtung nach Anspruch 1, dadurch gekennzeichnet, daß die am Walzengrundwerkstoff angeordnete radial innerste Schicht durch Formschweißen aufgebracht ist und mit einer Dicke von 100 bis 200 mm erheblich dicker ist als die übrigen Schichten.

3. Walzenbeschichtung nach Anspruch 1, dadurch gekennzeichnet, daß der Legierungswerkstoff der Außenschicht folgende Zusammensetzung in Gewichts-% aufweist:
| | |
|---|---|
| C | 0,8 bis 2,6 |
| Si | 1,5 bis 3,5 |
| Mn | 0,7 bis 1,5 |
| Cr | 5,0 bis 15,0 |
| Mo | 0,8 bis 3,0 |
| N | max. 0,1 |
| Al | max. 0,2 |
| Ti | 0,0 bis 10,0 |
| V | 0,0 bis 10,0 |
| Nb | 0,0 bis 15,0 |
| Rest | Eisen |

4. Walzenbeschichtung nach Anspruch 3, dadurch gekennzeichnet, daß der Legierungswerkstoff eine Härte von mehr als 52 HRC (Härteprüfung nach Rockwell C) aufweist.

5. Verfahren zum Aufbau der Walzenbeschichtung nach einem oder mehreren der Ansprüche 1 bis 4, dadurch gekennzeichnet, daß die inneren Schichten durch Unterpulver-Bandauftragsschweißung und die Außenschicht durch Unterpulver-Füllbandauftragsschweißung aufgebracht werden.

## Claims

1. Wear-resistant surface coating for the rollers of high-pressure roller presses for the crushing of granular material, having three layers of different materials built up one above the other by build-up welding on the roller base material, characterized in that the radially inmost layer of the roller armour consists of an unalloyed ferritic material, the central layer consists of a ferritic material alloyed with Cr and Mo and the outer layer consists of a wear-resistant alloy so that there is a gradual increase in hardness and strength proportional to the radial distance of the layers from the roller base material via the intermediate layers to the outer armouring layer.

2. Roller coating according to Claim 1, characterized in that the radially innermost layer arranged on the roller base material is applied by welding to shape and, with a thickness of between 100 and 200 mm, is substantially thicker than the other layers.

3. Roller coating according to Claim 1, characterized in that the alloy material of the outer layer has the following composition in % by weight:
| | |
|---|---|
| C | 0.8 to 2.6 |
| Si | 1.5 to 3.5 |
| Mn | 0.7 to 1.5 |
| Cr | 5.0 to 15.0 |
| Mo | 0.8 to 3.0 |
| N | max. 0.1 |
| Al | max. 0.2 |
| Ti | 0.0 to 10.0 |
| V | 0.0 to 10.0 |
| Nb | 0.0 to 15.0 |
| Rest | Iron |

4. Roller coating according to Claim 3, characterized in that the alloy material has a hardness of more than 52 HRC (hardness testing to Rockwell C).

5. Method of building up the roller coating according to one or more of Claims 1 to 4, characterized in that the inner layers are applied by submerged-arc strip build-up welding and the outer layer by submerged-arc filler-strip build-up welding.

## Revendications

1. Enduction superficielle résistant à l'usure pour les cylindres de presses à cylindres à haute pression destinés à la fragmentation par pression de matériaux granuleux, enduction consistant en trois couches de différentes matières appliquées l'une sur l'autre, par soudage, sur le corps de base du cylindre, caractérisé par le fait que, radialement, la couche la plus intérieure du blindage du cylindre est constituée par une matière ferritique non alliée, la couche médiane est constituée par une matière ferritique alliée au Cr,Mo, la couche extérieure est constituée par un alliage résistant à l'usure, de sorte que la dureté et la résistance augmentent progressivement et proportionnellement à leur distance radiale à la matière de base du cylindre, en passant par les couches intermédiaires jusqu'à la couche de blindage extérieure.

2. Enduction de cylindre suivant la revendication 1, caractérisé par le fait que la couche, radialement la plus intérieure, disposée contre la matière de base du cylindre est mise en place par soudage moulé et qui, du fait de son épaisseur de 100 à 200 mm, est considérablement plus épaisse que les autres couches.

3. Enduction de cylindre suivant la revendication 1, caractérisée par le fait que le matériau allié de la couche extérieure présente la composition suivante en % de poids:
| | |
|---|---|
| C | 0,8 à 2,6 |
| Si | 1,5 à 3,5 |
| Mn | 0,7 à 1,5 |
| Cr | 5,0 à 15,0 |
| Mo | 0,8 à 3,0 |
| N | max. 0,1 |
| Al | max. 0,2 |
| Ti | 0,0 à 10,0 |
| V | 0,0 à 10,0 |
| Nb | 0,0 à 15,0 |
| reste | fer |

4. Enduction de cylindres suivant la revendication 3, caractérisée par le fait que le matériau allié présente une dureté de plus de 52 HRC (essai de dureté suivant Rockwell C).

5. Processus pour la réalisation de l'enduction des cylindres suivant l'une ou plusieurs des revendications 1 à 4, caractérisé par le fait que les couches intérieures sont mises en place par un soudage à l'arc sous flux solide appliqué par bande et la couche extérieure par un soudage à l'arc sous flux solide appliqué par bande de remplissage.
